# EUROPEAN PATENT APPLICATION

(11) **EP 3 991 823 A1**
(43) Date of publication of application: **04.05.2022**
(21) Application number: 21205369.8
(22) Date of filing: 28.10.2021
(51) Int. Cl.: B01D 39/16, A41D 13/11, A62B 23/02

(54) **FACE MASK**

(30) Priority: 30.10.2020 BE 202005776
(71) Applicant: Conteyor International NV, 9820 Merelbeke (BE)
(72) Inventor: Van Neck, Petra, 9820 Merelbeke (BE)
(74) Representative: Brantsandpatents bvba

(57) **Abstract**

The current invention relates to a face mask comprising a body portion configured to be placed over a mouth and at least part of a nose of a user, wherein said body portion is comprised of a plurality of layers super-imposed on each other, said body portion comprises a least two layers of non-woven web, characterized in that said non-woven web having a weight of between 20 and 50 g/m² and is comprised of polyester/polyamide microfilaments, having a diameter of less than 5 micron.

## Description

### FIELD OF THE INVENTION

The present invention relates to a face mask that is washable and reusable, and optionally has germicidal activity.

### BACKGROUND

Face masks find utility in a variety of medical, industrial and household applications by protecting the wearer from inhaling dust and other harmful airborne contaminates through their mouth or nose. The use of face masks is a recommended practice in the healthcare industry to help prevent the spread of disease. Face masks worn by healthcare providers help reduce infections in patients by filtering the air exhaled from the wearer, thus reducing the number of harmful organisms or other contaminants released into the environment. Additionally, face masks protect the healthcare worker by filtering airborne contaminants and microorganisms from the inhaled air. The section of the face mask that covers the nose and mouth is typically known as the body portion. The body portion of the mask may be comprised of several layers of material. At least one layer may be composed of a filtration material that prevents the passage of germs and other contaminants therethrough but allows for the passage of air so that the user may comfortably breathe. The porosity of the mask refers to how easily air is drawn through the mask and a more porous mask is, of course, easier to breathe through. The body portion may also contain multiple layers to provide additional functionality for the face mask. Face masks may, for example, include one or more layers of material on either side of the filtration material layer. Further components may be attached to the mask to provide additional functionality.

The recent outbreaks of severe acute respiratory syndrome (SARS) and more specifically the worldwide covid-19 outbreak has elevated interest in face masks that comply with the requirements for being labeled a medical face mask, while said masks are reusable and washable. Indeed, the pandemic of 2020 taught us that it is needed to provide reusable medical facemasks, in order to prevent shortage of the much needed medical face masks.

In addition, there is a demand for a germicidal mask which will deactivate microorganisms contacting a face mask so that they are not inhaled by a wearer and so that they are not transferred to another surface by inadvertent contact of the maskon other surfaces or the hands.

WO 2007 027 413 describes a face mask wherein the outer layer has been treated with a germicidal agent. However, this face mask is not washable or reusable and therefore has many drawbacks, especially in times where huge shortages of medical face masks were reported worldwide. There is thus a need to provide for a reusable, washable and medical grade face mask. The current invention tries to provide a solution for the latter problem.

### SUMMARY OF THE INVENTION

The present invention and embodiments thereof serve to provide a solution to one or more of above-mentioned disadvantages. To this end, the present invention relates to a face mask according to claim 1.

Preferred embodiments of the device are shown in any of the claims 2 to 15.

Said face mask is a surgical face mask complying with the requirements as defined in EN 14683:2019+AC:2019 Medical face masks - Requirements and test methods and/or ASTM F2100 - 19e1 Standard specification for Performance of Materials Used in Medical Face Masks. Although these norms refer to disposable face masks, a face mask according to the current invention is washable and therefore reusable, remaining compliant with EN 14683:2019+AC:2019 and/or ASTM F2100 - 19e1 and thus without losing its filtration efficiency, breathability and microbial cleanliness.

In a preferred embodiment, said face mask is provided with a germicidal agent, thereby also ensuring that the mask kills or inhibits bacteria and/or viruses.

### DETAILED DESCRIPTION OF THE INVENTION

The present invention concerns a face mask that is washable and reusable, and is conform the requirements for surgical face masks according to EN 14683:2019+AC:2019 and/or ASTM F2100 - 19e1. The mask is reusable due to the fact that it is washable, without losing its qualitative properties and remaining compliant with EN 14683:2019+AC:2019 and/or ASTM F2100 - 19e1.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The recitation of numerical ranges by endpoints includes all numbers and fractions subsumed within that range, as well as the recited endpoints.

The expression "% by weight", "weight percent", "%wt" or "wt%", here and throughout the description unless otherwise defined, refers to the relative weight of the respective component based on the overall weight of the formulation.

Whereas the terms "one or more" or "at least one", such as one or more or at least one member(s) of a group of members, is clear *per se,* by means of further exemplification, the term encompasses *inter alia* a reference to any one of said members, or to any two or more of said members, such as, e.g., any ≥3, ≥4, ≥5, ≥6 or ≥7 etc. of said members, and up to all said members.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

The terms "surgical" or "medical" face mask are used interchangeable throughout the description and refer to face masks that comply with the requirements as set forth in EN 14683:2019+AC:2019 and/or ASTM F2100 - 19e1.

The term "germicidal agent" as used herein refers to an agent that is able to prevent growth or the action of microorganisms and thereby also preventing infection.

The term "microorganism" as used herein refers to bacteria, fungi, archaea, protozoa, prions, viruses and/or viral particles.

The term "reusable" refers to the reusability of an item without loss of quality.

In a first aspect, the current invention relates to a face mask comprising a body portion configured to be placed over a mouth and at least part of a nose of a user, wherein said body portion is comprised of a plurality of layers super-imposed on each other, said body portion comprises at least two layers of non-woven web. More in particular, said non-woven web, having a weight of between 20 and 50 g/m², is comprised of polyester/polyamide microfilaments having a diameter of less than 5 micron.

Microfilaments having a diameter of less than 5 micron are beneficial to form a non-woven web with a dense structure, suited for entrapment of microorganisms, while maintaining the breathability capacity, due to the presence of an abundance of small channels, suited for the passage of air. It was found that the presence of at least two layers of non-woven web is sufficient for a good filtration efficiency of said face mask. Non-woven webs with a weight of between 20 and 50 g/m² will have a sufficiently density to obtain a high filtration efficiency, while still resulting in a low weight face mask.

The body portion can be of a variety of styles and geometries, such as, but not limited to, flat half masks, pleated face masks, cone masks, duckbill style masks, trapezoidally shaped masks, etc.. More in particular, the face mask may isolate the mouth and the nose of the user from the environment. The face mask may be attached to the user by a fastening member that may be a pair of manual tie straps that are wrapped around the head of the user and are connected to one another. It is to be understood, however, that other types of fastening members are employed in accordance with various exemplary embodiments. Instead of the manual tie straps, for example, the face mask may be attached to the user by a fastening member that may be ear loops, elastic bands wrapped around the head of the user, a hook and loop type fastener arrangement (e.g. VELCRO^{®} fasteners), or a connection directly attaching the face mask to a hair cap.

Additionally, the configuration of the face mask can be made in order to cover both the eyes, hair, nose, throat, and mouth of the user. As such, the present invention includes face masks that cover areas above and beyond simply the nose and mouth of the user. The face mask may also incorporate any combination of known face mask features, such as visors or shields, sealing films, beard covers, etc.

Multiple layers of the face mask may be joined by various methods, including adhesive bonding, thermal point bonding, sewing or ultrasonic bonding. Preferably the multiple layers are joined by ultrasonic bonding. In an embodiment, said body portion and/or the entire face mask may be made of any number of layers, such as and including 2, 3, 4, 5, 6, 7, 8, 9, 10. In a preferred embodiment, said mask or body portion comprises between 2 to 5 layers.

In a further embodiment said body portion is comprised of two to five layers of non-woven web, having a weight of between 20 and 50 g/m², and comprised of polyester/polyamide microfilaments having a diameter of less than 5 micron.

Two layers of non-woven web are a minimum number of layers for a face mask with high filtration efficiency of microorganisms. When having more than five layers of non-woven web, filtration efficiency is no longer substantially improved, while weight of a face mask is increasing.

In a further embodiment, said non-woven web has a weight of between 25 and 45 g/m².

In a preferred embodiment the attachment members are a pair of elastic ear loops, wherein a part of an ear loop is placed inside a tube. Said tubes are at opposite edges of the body portion of the face mask and are configured to be positioned on cheeks of a user of the face mask. Said tubes are preferably flexible. Said tubes are preferably formed by folding over said edges of the face mask and attaching said edges to each other. Said tubes are advantageous to obtain a face mask with a body portion that closely fits the cheeks of a user, because the whole edge of the body portion is pulled towards the ear of the user. This is not the case with a face mask where elastic ear loops are only attached to two points on the edge, resulting in a gap between the body portion and the cheeks of the user.

In a preferred embodiment said microfilaments are comprised of a mixture of between 65 to 75% polyester and 25 to 35% polyamide.

Polyester and polyamide are strong materials and are very well suited for reusable textiles. Polyester and polyamide are washable. Polyamide is very elastic and a dimensionally stable material. Polyester has a low weight and is a resilient material. Polyester is sweat resistant. Polyester is very well suited for wrinkle resistant textile. Microfilaments comprised of a mixture of between 65 to 75% polyester and 25 to 35% polyamide are well suited for a washable and reusable face mask, that easily adjust to contours of a face and is dimensionally stable.

In a preferred embodiment said non-woven web is selected from the group consisting of spunbond webs, meltblown webs, flashspun webs, and wet laid webs.

Spunbond webs can be produced in one continuous process, resulting in a high throughput and low production costs. Meltblown webs can be produced in very thin filaments, making meltblown webs very well suited for fine filtration in face masks. The very thin filaments of a meltblown web do have a low intrinsic strength. Meltblown webs and spunbond web can be beneficially combined in a spunbond-meltblown web (SM web) or spunbond-meltblown-spunbond web (SMS web) to combine the very fine filaments of meltblown web with stronger spunbond webs. Flashspun webs have a high density and are therefore suited for filtration. Also wet laid webs result in non-woven webs having a high density.

The face mask according to any of the previous embodiments wherein at least one layer comprises a polyamide or polyvinyl butyral coating.

The polyamide or polyvinyl butyral coating is preferably applied by electrospinning on a layer of non-woven web. Said layer of non-woven web is one of said at least two layers of non-woven web, comprised of polyester/polyamide microfilaments, as described in a previous embodiment. The polyamide or polyvinyl butyral coating is preferably applied in two layers on said layer of non-woven web.

Polyvinyl butyral coating is preferably applied in two layers, wherein said layers comprise filaments having a diameter of less than 2 micron and more than 0.1 micron.

If polyamide coating is used, said polyamide coating is preferably applied in two layers, wherein said layers comprise filaments having a diameter of less than 2 micron and more than 0.1 micron. Alternatively a first layer of polyamide coating comprises filaments having a diameter of less than 2 micron and more than 0.4 micron and a second layer of polyamide coating comprises filaments having a diameter of less than 0.4 micron, preferably less than 0.3 micron, more preferably less than 0.2 micron and even more preferably less than 0.1 micron.

The polyamide coating or polyvinyl butyral coating is preferably present at the side of said layer of non-woven web, facing the inside of the face mask. This is advantageous because bigger microorganisms will be caught in said layer of non-woven web, while smaller microorganisms that can travel through said layer of non-woven web will be caught by the polyamide coating or polyvinyl butyral coating. Additionally said layer of non-woven web will protect the polyamide coating or polyvinyl butyral coating against blockage by bigger microorganisms. It will also protect the polyamide coating or polyvinyl butyral coating during washing against damage or wear.

The polyamide coating or polyvinyl butyral coating is applied on said layer of non-woven web, while said layer of non-woven web is moved through an electrospinning apparatus at a speed of minimum 5 mm/s and maximum 40 mm/s, preferably minimum 10 mm/s and maximum 30 mm/s. The speed has an influence on the thickness of the layer of polyamide coating or polyvinyl butyral coating. A speed higher than 40 mm/s will result in a thin layer that does not increase substantially the filtration efficiency of the face mask. A speed lower than 5 mm/s will result in a thick layer that reduces breathability of the face mask.

The face mask according to any of the previous embodiments wherein at least one additional layer of polypropylene meltblown is comprised between said at least two layers of non-woven web.

As described in a previous embodiment meltblown webs are very well suited for fine filtration due to the very thin filaments of a meltblown web. Preferably the dimensions of the filaments of a polypropylene meltblown are within the same range as the dimensions of the filaments of a polyvinyl butyral coating.

A polypropylene meltblown has similar advantages as a polyamide coating or polyvinyl butyral coating.

In a preferred embodiment at least one layer is treated with a germicidal agent, preferably by the method selected from the group consisting of dipping and squeezing, spraying, ink jet printing and combinations thereof.

The term germicidal agent as used herein means an agent like chemicals or other substances that either kill (deactivate) or slow the growth of microorganisms. Among the agents in use today are antibacterial agents (which inhibit or deactivate bacteria), antiviral agents (which inhibit or deactivate viruses), antifungal agents (which inhibit or deactivate fungi), and antiparasitic drugs (which inhibit or deactivate parasites). Antimicrobial agents may be surface disinfectants (biocides) and therapeutic drugs (antibiotics).

The germicidal agent is present in the face mask in an effective amount. The term effective amount means that a face mask having the germicidal agent contains a lower level of viable pathogens such as bacteria or viruses than another face mask, identical but for the germicidal agent, when tested using the same method.

In an embodiment, said germicidal agent is present in an amount of between 2 and 10 weight percent of said layer, preferably between 2 and 8 weight percent, more preferably between 2 and 6 weight percent.

This is a sufficient amount of germicidal agent to reduce bacteria with 99,99% after 1 hour, tested according to STM E2149-13 "Dynamic Shake Flask", using a sample of 1 g of said layer, 50 ml 0.3 mM (millimolar) KH₂PO₄, 1x10^5 E.coli/ml, 0.01% Q2-5211 wetting agent.

In an embodiment, said germicidal agent is selected from the group of dimethyloctadecyl[3(trimethoxysilyl)propyl]ammoniumchloride, biguanides, quaternary ammonium compounds, quaternary ammonium siloxanes, polyquaternary amines, metal-containing species and oxides thereof, halogens, halogen-releasing agents, halogen-containing polymers, bromo-compounds, chlorine dioxides, thiazoles, thiocynates, isothiazolins, cyanobutanes, dithiocarbamates, thiones, alkylsulfosuccinates, alkyl-amino-alkyl glycines, dialkyl-dimethyl-phosphonium salts, cetrimides, hydrogen peroxide, 1-alkyl-1 ,5-diazapentane, cetyl pyridinium chloride, stabilized oxidants, stabilized peroxides, sulfides, bis-phenols, polyphenols, citric acid, chitosan, anatase TiO2, tourmaline, bamboo extract, and combinations thereof.

In a preferred embodiment, said germicidal agent is dimethyloctadecyl[3(trimethoxysilyl)propyl]ammoniumchloride, preferably at a concentration of between 2 and 10 weight percent of the layer on which said germicidal agent is applied.

The germicidal agent may be present on the outermost layer of the face mask. Locating the germicidal agent on the outermost layer provides the additional benefit of reducing the contact transfer of pathogens, in addition to reducing their passage through the mask. Furthermore, the location of the germicidal agent on the outer layer of the mask reduces the possibility that the germicidal agent will pass through the mask and be inhaled by a wearer.

In another, more preferred embodiment said germicidal agent is present on at least one layer, at the side of the layer facing the inside of said mask. The term "inside" refers to that side that faces the interior of the mask when being worn by a user, and which is not exposed to the environment. As the mask of the current invention is reusable by means of washing, the latter ensures that the germicidal agent is protected from the washing activities.

In an embodiment the face mask has a bacterial filtration efficiency BFE as measured by EN14683:2019+AC:2019 and/or ASTM F2100 - 19e1 greater than 95% for bacteria having a size smaller or equal to 3 micron, a viral filtration efficiency VFE as measured by EN14683:2019+AC:2019 and/or ASTM F2100 - 19e1 greater than 75%, and a breathability of 50 Pa/cm² or less as measured by EN14683:2019+AC:2019 and/or ASTM F2100 - 19e1. The viral filtration efficiency VFE is preferably greater than 80%, more preferably greater than 85% and even more preferably greater than 90%.

A BFE greater than 95% and a VFE greater than 75% can be reached by an advantageous combination of at least two layers of non-woven web, comprised of polyester/polyamide microfilaments as described in a previous embodiment. Applicants surprisingly determined that combining multiple layers of non-woven web, having a weight between 20 and 50 g/m² is advantageous for having a breathability of 50 Pa/cm² or less. Replacing multiple layers of non-woven web by a single layer of non-woven web with a weight equal to the combined weight of said multiple layers, increased the differential pressure and consequently decreased the breathability.

In a further embodiment, said face mask is washable, thereby maintaining a bacterial filtration efficiency BFE greater than 95% for bacteria having a size smaller or equal to 3 micron, a viral filtration efficiency VFE greater than 75%, and a breathability of 50 Pa/cm² or less.

The at least two layers of non-woven web, comprised of polyester/polyamide microfilaments as described in a previous embodiment, may shrink during a few first washes at 60° C with regular household washing powder, liquid laundry soap or laundry pods. Shrink has an advantageous effect on filtration efficiency due to a denser structure of the non-woven web, while shrink is limited, avoiding an increase in differential pressure and decrease in breathability. After the initial shrink, the non-woven web remains stable.

A face mask treated with a germicidal agent as described in a previous embodiment and washed 30 times at 60° C with regular household washing powder, liquid laundry soap or laundry pods, will still have sufficient active germicidal agent to reduce bacteria with 89,90% after 1 hour, tested according to STM E2149-13 "Dynamic Shake Flask", using a sample of 1 g of said layer, 50 ml 0.3 mM (millimolar) KH₂PO₄, 1x10^5 E.coli/ml, 0.01% Q2-5211 wetting agent. A face mask washed 50 times at 60° C with the same washing powder, liquid laundry soap or laundry pods, will still have sufficient active germicidal agent to reduce bacteria with 82,32% after 1 hour, according to the same test. The regular household washing powder, liquid laundry soap or laundry pods are preferably non-ionic.

A face mask according to the current invention is at least 50 times reusable when washed with regular household washing powder, liquid laundry soap or laundry pods at 60° C.

In a further embodiment, the face mask has a microbial cleanliness after washing less than or equal to 30 CFU/g. Washing is at a temperature of 60° C with regular household washing powder, liquid laundry soap or laundry pods. A face mask according to the current invention can be washed with means readily available to a general household, resulting in a microbial clean face mask that is reusable.

In another aspect, the current invention also discloses a face mask, comprising a body portion configured to be placed over a mouth and at least part of a nose of a user, wherein said body portion is comprised of a plurality of layers super-imposed on each other, said body portion comprises a least two layers of non-woven web, wherein said face mask is washable, and wherein said at least one layer comprises a germicidal agent, said germicidal agent is dimethyloctadecyl[3(trimethoxysilyl)propyl]ammoniumchloride at a concentration of between 2 and 10 weight percent of said layer.

Said face mask further also complies with all features as described in the context of the face mask described above, said features are herewith reprised.

The present invention will be now described in more details, referring to examples that are not limitative.

### EXAMPLES

The present invention will now be further exemplified with reference to the following examples. The present invention is in no way limited to the given examples or to the embodiments presented in the figures.

### Example 1.

Example 1 concerns a face mask comprising a body portion, wherein the body portion is comprised of three layers super-imposed on each other. Each of the three layers are of a non-woven web, with each of them a weight of about 40 g/m². Suitable material is evolon^{®}, which can be purchased from Freudenberg. The non-woven webs are comprised of a mixture of 70% polyester and 30% polyamide microfilaments having a diameter of less than 5 micron. The face mask comprises a pair of elastic ear loops, wherein a part of each ear loop is placed inside a tube. The tubes are at opposite edges of the body portion of the face mask and are formed by folding over said edges of the face mask and attaching said edges to each other.

After testing, the face mask was shown to have a breathability of less than 50 Pa/cm². The bacterial filtration efficiency BFE was greater than 95% for bacteria having a size smaller or equal to 3 micron and the viral filtration efficiency was greater than 75%.

In a subsequent test, the face was washed 30 times at 60°c in the presence of a detergent. After washing, the face mask was resubjected to the testing as described above. The bacterial filtration efficiency BFE and viral filtration efficiency VFE increased slightly due to initial crimp while breathability hardly changed. The microbial cleanliness after washing was less than 30 CFU/g.

### Example 2.

Example 2 is another face mask according to the current invention and concerns a face mask comprising a body portion, wherein the body portion is comprised of four layers super-imposed on each other. The four layers are of a non-woven web, with a weight of about 30 g/m². The non-woven webs are comprised of a mixture of 70% polyester and 30% polyamide microfilaments having a diameter of less than 5 micron.

The face mask was subjected to the tests as described in Example 1, the results being comparable to those obtained for the face mask of example 1.

### Example 3.

Example 3 concerns a face mask comprising a body portion, wherein the body portion is comprised of two layers super-imposed on each other. The two layers are of a non-woven web, with a weight of about 30 g/m². The non-woven webs are comprised of a mixture of 70% polyester and 30% polyamide microfilaments having a diameter of less than 5 micron. One of the two layers comprises a polyamide coating. The polyamide coating, PA6, is applied at the side of said layer facing the inside of the face mask. The polyamide coating is electrospun in two layers. A first layer comprises filaments having a diameter of less than 2 micron and more than 0.4 micron and a second layer of polyamide coating comprises filaments having a diameter of less than 0.4 micron.

### Example 4.

Example 4 is an alternative embodiment and concerns a face mask comprising a body portion, wherein the body portion is comprised of two layers super-imposed on each other. The two layers are of a non-woven web, with a weight of about 40 g/m². The non-woven webs are comprised of a mixture of 70% polyester and 30% polyamide microfilaments having a diameter of less than 5 micron. One of the two layers comprises a polyamide coating. The polyamide coating, PA6, is present at the side of said layer facing the inside of the face mask. The polyamide coating is electrospun in two layers. A first layer comprises filaments having a diameter of less than 2 micron and more than 0.4 micron and a second layer of polyamide coating comprises filaments having a diameter of less than 0.4 micron. One of the two layers comprises a germicidal agent. The germicidal agent is present at the side of said layer facing the inside of the face mask. The germicidal agent is dimethyloctadecyl[3(trimethoxysilyl)propyl]ammoniumchloride.

### Example 5.

Example 5 concerns a face mask comprising a body portion, wherein the body portion is comprised of two layers super-imposed on each other. The two layers are a non-woven web, with a weight of about 40 g/m². The non-woven webs are comprised of a mixture of 70% polyester and 30% polyamide microfilaments having a diameter of less than 5 micron. An additional layer of non-woven web is positioned in between said two layers of non-woven web. Said additional layer is a polypropylene meltblown non-woven web with a weight of about 25 g/m².

### Example 6

In example 6, the face masks as described in examples 1 to 3 and 5 are treated with a germicidal agent. The agent is added on the inner layers or those side of the layers that face the inner side of the mask.

## Claims

1. A face mask comprising a body portion configured to be placed over a mouth and at least part of a nose of a user, wherein said body portion is comprised of a plurality of layers super-imposed on each other, said body portion comprises at least two layers of non-woven web, **characterized in that** said non-woven web, having a weight of between 20 and 50 g/m², and being comprised of polyester/polyamide microfilaments having a diameter of less than 5 micron.

2. The face mask according to claim 1, wherein said body portion is comprised of two to five layers of non-woven web having a weight of between 20 and 50 g/m² and being comprised of polyester/polyamide microfilaments having a diameter of less than 5 micron.

3. The face mask according to any of the previous claims, said non-woven web having a weight of between 25 and 45 g/m².

4. The face mask according to any of the previous claims, wherein said microfilaments are comprised of a mixture of between 65 to 75% polyester and 25 to 35% polyamide.

5. The face mask according to any of the previous claims, wherein said non-woven web is selected from the group consisting of spunbond webs, meltblown webs, flashspun webs, and wet laid webs.

6. The face mask according to any of the previous claims, wherein at least one layer comprises a polyamide or polyvinyl butyral coating.

7. The face mask according to any of the previous claims, wherein at least one additional layer of polypropylene meltblown is comprised between said at least two layers of non-woven web.

8. The face mask according to any of the previous claims, wherein at least one layer is treated with a germicidal agent, preferably by the method selected from the group consisting of dipping and squeezing, spraying, ink jet printing and combinations thereof.

9. The face mask as set forth in claim 8, wherein said germicidal agent is present in an amount of between 2 and 10 weight percent of said layer.

10. The face mask of claim 8 or 9, wherein said germicidal agent is selected from the group of dimethyloctadecyl[3(trimethoxysilyl)propyl]ammoniumchloride, biguanides, quaternary ammonium compounds, quaternary ammonium siloxanes, polyquaternary amines, metal-containing species and oxides thereof, halogens, halogen-releasing agents, halogen-containing polymers, bromo-compounds, chlorine dioxides, thiazoles, thiocynates, isothiazolins, cyanobutanes, dithiocarbamates, thiones, alkylsulfosuccinates, alkyl-amino-alkyl glycines, dialkyl-dimethyl-phosphonium salts, cetrimides, hydrogen peroxide, 1-alkyl-1 ,5-diazapentane, cetyl pyridinium chloride, stabilized oxidants, stabilized peroxides, sulfides, bis-phenols, polyphenols, citric acid, chitosan, anatase TiO2, tourmaline, bamboo extract, and combinations thereof.

11. The face mask according to any of the claims 8 to 10, wherein said germicidal agent is dimethyloctadecyl[3(trimethoxysilyl)propyl]ammoniumchloride.

12. The face mask according to any of the previous claims 8 to 11, wherein said germicidal agent is present on at least one layer, at the side of the layer facing the inside of said mask.

13. The face mask to any of the previous claims wherein said mask has a bacterial filtration efficiency BFE as measured by EN14683:2019+AC:2019 and/or ASTM F2100 - 19e1 greater than 95% for bacteria having a size smaller or equal to 3 micron, a viral filtration efficiency VFE as measured by EN14683:2019+AC:2019 and/or ASTM F2100 - 19e1 greater than 75%, and a breathability of 50 Pa/cm² or less as measured by EN14683:2019+AC:2019 and/or ASTM F2100 - 19e1.

14. The face mask according to any of the previous claims, wherein said face mask is washable, thereby maintaining the features of claim 13.

15. The face mask according to claim 14, wherein the face mask has a microbial cleanliness after washing less than or equal to 30 CFU/g.
